# EUROPEAN PATENT APPLICATION

(11) **EP 3 301 381 A1**
(43) Date of publication of application: **04.04.2018**
(21) Application number: 17155994.1
(22) Date of filing: 25.05.2011
(51) Int. Cl.: F25B 21/02

(54) **PERSONAL BEVERAGE WARMERS AND COOLERS FOR VEHICLE SEATS**

(30) Priority: 25.05.2010 US 347927 P
(62) Divisional of application: 11787300.0
(71) Applicant: B/E Aerospace, Inc., Wellington, FL 33414 (US)
(72) Inventor: LU, Qiao, Placentia, California 92870 (US)
(74) Representative: Marles, Alan David

(57) **Abstract**

Example personal beverage warmers and coolers for vehicle seats are disclosed. A disclosed example apparatus to regulate the temperature of a beverage near a seat of a vehicle, the apparatus comprises an assembly of beverage warmer/coolers and each includes: a base including a thermally conductive material that conducts heat in a direction that is at least one of to or from a container seated thereon, a thermoelectric device thermally coupled with the base and to be energized to exchange heat with the base, and a heat exchanger thermally coupled with the thermoelectric device and a liquid medium to exchange heat therebetween. First and second extension inserts (450, 460) are provided for locking attachment to the bases.

## Description

### CROSS-REFERENCE TO RELATED APPLICATION

This application claims the priority benefit of U.S. Provisional Application No. 61/347,927, filed on May 25, 2010, and entitled "Beverage Warmer and Cooler for Aircraft Passenger Seats", the entirety of which is incorporated herein by reference.

### FIELD OF THE DISCLOSURE

Disclosed embodiments generally relate to apparatuses for beverage temperature control, and, more particularly, to beverage temperature control or regulation apparatuses for vehicle seats.

### BACKGROUND

Vehicles defined herein to include an automobile, a train, a truck, a boat or an aircraft, typically provide cupholders for holding beverage containers such as glasses, cups, bottles, cans and/or mugs. The cupholders are generally provided in the vicinity of crew member and passenger seats. For example, a cupholder may be provided in an armrest or console adjacent to a person's seat, but may also extend from a dashboard or other surface of the vehicle. The cupholders generally include a recessed portion which holds the beverage container in a stationary upright position relative to the vehicle while the vehicle accelerates, decelerates, or tilts forward, backward and to either side.

### SUMMARY

Example beverage temperature control or regulation apparatuses for vehicle seats are disclosed. A disclosed example personal beverage warmer and cooler apparatus to regulate the temperature of a beverage near a seat of a vehicle, the apparatus includes: a base including a thermally conductive material that conducts heat in a direction that is at least one of to or from a container seated thereon, a thermoelectric device thermally coupled with the base and to be energized to exchange heat with the base, and a heat exchanger thermally coupled with the thermoelectric device and a liquid medium to exchange heat therebetween.

A disclosed example seating area of a vehicle includes a temperature regulating apparatus having a base including a thermally conductive material that conducts heat at least one of to or from a container seated thereon, a thermoelectric device thermally coupled with the base and to be energized to exchange heat with the base, and a heat exchanger thermally coupled with the thermoelectric device and a liquid medium to exchange heat therebetween.

The seating area may include an additional temperature regulating apparatus.

A disclosed example method includes energizing a thermoelectric device at a vehicle seat to a first state to cool a beverage container thermally coupled to the thermoelectric device when a first user input is received; and energizing the thermoelectric device to a second state to heat the beverage container when a second user input is received.

The method may also include exchanging first heat between the thermoelectric device and a heat exchanger; and exchanging second heat between the heat exchanger and a liquid medium.

Energizing the thermoelectric device to the first state may include applying an electrical current to a Peltier device, and energizing the thermoelectric device to second state may include applying an opposite electrical current to the Peltier device.

The first user input may correspond to a first position of a switch, and the second user input may correspond to a second position of the switch.

For any of the examples, the liquid medium may be air, the apparatus may also include a fan that blows air in thermal contact with the heat exchanger.

For any of the examples, the thermoelectric device may be energized by a power supply to heat the base and/or to cool the base.

For any of the examples, a switch may be used to change a polarity of a power supply that energizes the thermoelectric device, wherein a first state of the switch may cause the power supply to cool the base, and a second state of the switch may cause the power supply to heat the base.

For any of the examples, the base may include a lock that mates with a key of an extension insert to secure the extension insert on the base, the extension insert may be dimensioned to receive a container holding the beverage.

For any of the examples, the base may include a recessed portion dimensioned to receive a container holding the beverage.

Any of the examples may include a power supply and a processor, the processor may control the power supply to maintained a temperature of the beverage.

### BRIEF DESCRIPTION OF THE DRAWINGS

FIG. 1A illustrates an exemplary passenger seat environment of a vehicle including a plurality of beverage holders.
FIG. 1B illustrates the plurality of beverage holders of FIG. 1A in more detail.
FIG. 2A schematically illustrates an exemplary personal beverage warmer and cooler including a thermoelectric device configured to cool a beverage.
FIG. 2B schematically illustrates an exemplary personal beverage warmer and cooler including a thermoelectric device configured to warm a beverage.
FIGS. 3A and 3B illustrate opposite side views of an exemplary personal beverage warmer and cooler.
FIG. 4A illustrates a cross-sectional view of the exemplary personal beverage warmer and cooler of FIGS. 3A and 3B including a beverage container seated therein.
FIGS. 4B and 4C illustrate exemplary beverage containers including extension inserts and configured to be securely seated in the beverage warmer and cooler of FIG. 4A.
FIGS. 5A and 5B illustrate the exemplary personal beverage warmer and cooler of FIG. 3A in which the extension inserts of FIGS. 4B and 4C are seated, respectively.
FIG. 6 illustrates a side view of another exemplary personal beverage warmer and cooler.
FIG. 7A schematically illustrates a side view of still another exemplary personal beverage warmer and cooler.
FIG. 7B schematically illustrates a cut-away side view of the exemplary personal beverage warmer and cooler of FIG. 7A.
FIG. 8A schematically illustrates a plurality of the exemplary personal beverage warmer and cooler of FIG. 7A adjacent to one another.
FIGS. 8B and 8C illustrate opposite side views of the plurality of exemplary personal beverage warmer and cooler of FIG. 8A adjacent to one another.
FIGS. 9A - 9F illustrate various views of the exemplary personal beverage warmers and coolers of FIG. 8A.

### DETAILED DESCRIPTION

A beverage in a beverage container held in a cupholder generally does not stay at a desired temperature. Over time, the temperature of the beverage generally trends toward the ambient air temperature of a vehicle. For example, a hot beverage such as coffee or tea may not be kept hot, and a cold beverage such as fruit juice or soda may not be kept cold for a time period long enough to enable the person to fully enjoy the beverage at their desired or preferred temperature. Thus, a person may only have a limited time to drink a beverage before its temperature becomes undesirable. While insulated beverage containers may mitigate this problem, insulated beverage containers are generally not convenient because a beverage needs to be transferred from its original container into the insulated beverage container prior to consuming the beverage. Additionally, the temperature of a beverage in an insulated beverage containers still trends toward the ambient temperature, and a person may still only have a limited time to drink a beverage before its temperature becomes undesirable, even if that limited time is greater than if the beverage were not in the insulated beverage container.

Embodiments of personal beverage warmers and coolers that address at least some of the above problems are disclosed herein. The disclosed personal beverage warmers and coolers may be included in a vehicle to hold a beverage container and maintain a beverage within the beverage container at a desired temperature until the beverage has been consumed. The personal beverage warmers and coolers disclosed herein may be, for example, located in the vicinity of a person's seat, a sleeping cabin and/or at any another location within the vehicle where a person may be present during a journey, e.g., a lounge area where persons may gather to enjoy food and beverages in each other's company. Additionally or alternatively, the disclosed personal beverage warmers and coolers may be located in a pilot's cabin and/or in a galley for use by the crew of the vehicle. The personal beverage warmers and coolers may be configured or enabled by each person to keep warm beverages such as coffee, tea, and hot chocolate at their desired warm temperature(s). Likewise, the personal beverage warmers and coolers may be set or enabled by each person to keep cold beverages such as soda, water, and wine at their desired cold temperature(s). In this way, each person may consume their beverages at their own pace and at their desired temperature(s).

The example personal beverage warmer and cooler disclosed herein may be an embodiment of a personal heating and cooling device, which in various embodiments may also used for heating and cooling storage of food and/or other personal items that may benefit from or need to be stored at a temperature other than an ambient air temperature. For example, some medications may need to be stored at a temperature lower than ambient air temperature while also being conveniently accessible to the person.

Embodiments of personal beverage warmers and coolers disclosed herein feature a compact design and a light weight structure, both of which facilitate their widespread deployment throughout an aircraft for use by individual persons, unlike traditional refrigeration systems that are typically concentrated in galleys for use by cabin crew on behalf of all persons. In various embodiments, the disclosed personal beverage warmers and coolers may be integrated with aircraft heat-sink systems and/or other aircraft components to increase operational efficiency.

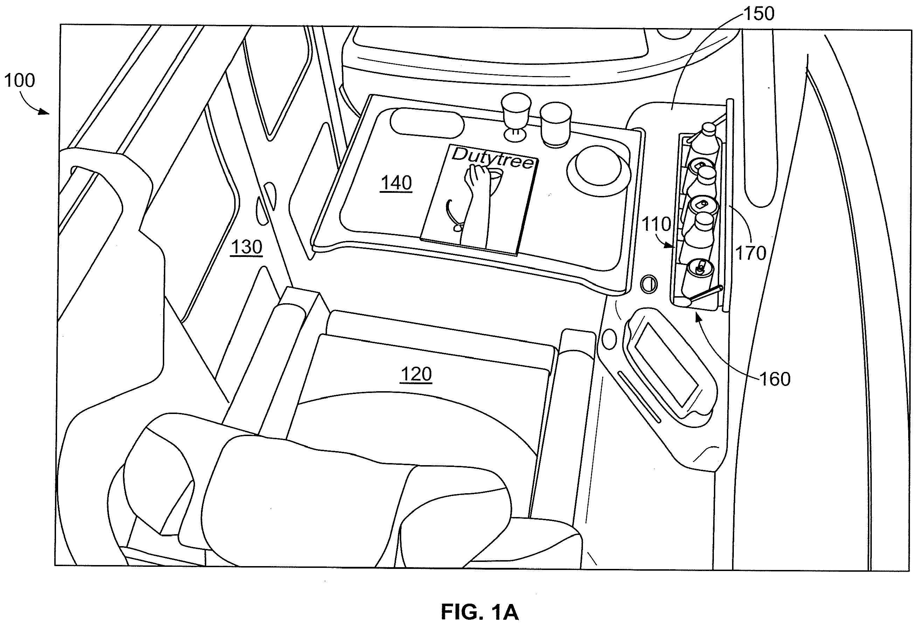

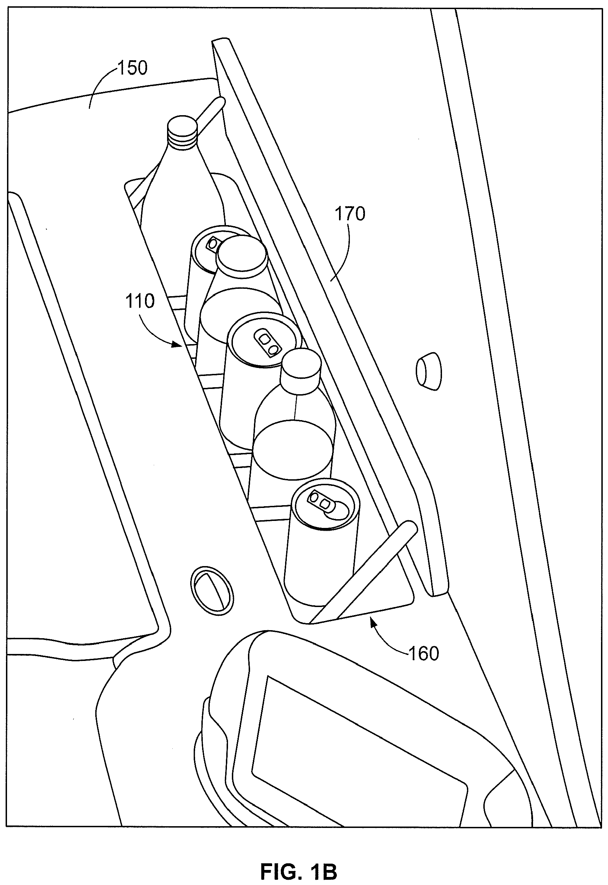

FIG. 1A illustrates an exemplary passenger seat environment 100 of a vehicle including a plurality of beverage holders 110. The passenger seat environment 100 may be, for example, a super first class seat of an aircraft. The example passenger seat environment 100 of FIG. 1 includes a cushioned seat 120 in which a person may be seated. To the left of the seat 120 is a doorway 130 through which the person may enter and exit the passenger seat environment 100. In front of the seat 120 is a tray 140 on which the person may place reading materials such as books, magazines, and catalogs, food service items such as plates, silverware, napkins, cups, glasses, laptop computers, and/or other items that a person may desire to have ready access to during a journey. The tray 140 may be collapsible or retractable so that the person may stow the tray when not in use. The tray 140 may be coupled with a console 150 positioned to the right of the cushioned seat 120, or on an opposite side of the passenger seat environment 100 than the doorway 130.

FIG. 1B illustrates the example plurality of beverage holders 110 of FIG. 1A in more detail. The example beverage holders 110 may each hold a different beverage container. In this way, a person may conveniently have ready access to a plurality of beverages during a journey. For example, the person may have different brands of juice, water, and soda ready and available for consumption whenever the person chooses. In the illustrated example of FIGS. 1A and 1B, the beverage holders 110 are arranged in a row within a beverage holder zone 160. However, the beverage holders 110 may be implemented in other arrangements. The beverage holder zone 160 may also include a beverage holder zone lid 170 that may be open when beverages are placed in the beverage holders 110, and closed when no beverages are placed in the beverage holders 110. One or more of the beverage holders 110 may include an embodiment of the personal beverage warmers and coolers disclosed herein.

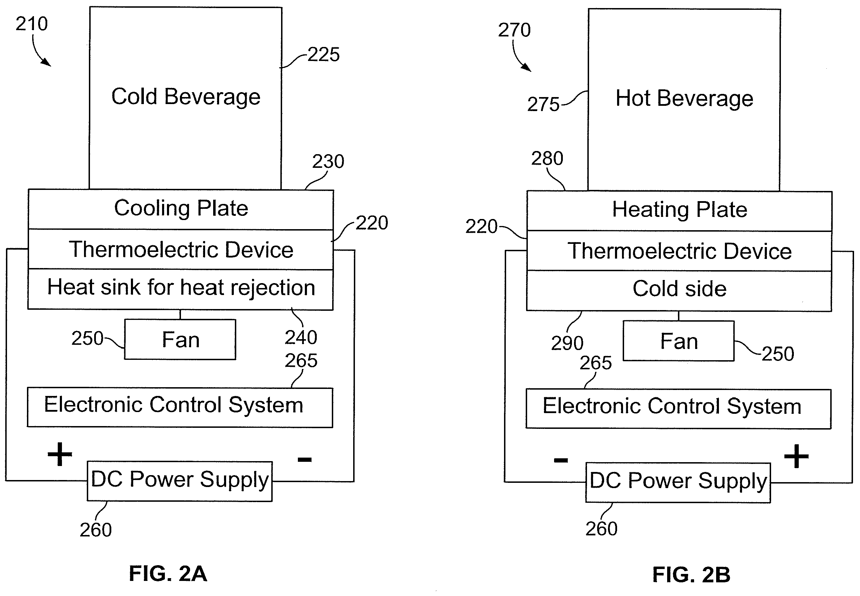

FIG. 2A schematically illustrates an exemplary personal beverage warmer and cooler 210 including an example thermoelectric device 220 configured to cool a beverage. A beverage container 225 containing a beverage, which a user wants to consume cool or cold, may be seated on an example cooling plate or base 230. The cooling plate 230 of FIG. 2A cools the beverage through thermal contact with the beverage container 225 containing the beverage. The cooling plate 230 is cooled by the thermoelectric device 220. The thermoelectric device 220 of FIG. 2A may include a Peltier device that uses a Peltier effect in which a voltage is applied across or direct current (DC) is passed through two dissimilar conductors to create an electrical circuit that transfers heat in a direction of charge carrier movement. In this way, the thermoelectric device 220 provides direct heat transfer from the cooling plate 230 through the thermoelectric device 220 into a heat sink or heat exchanger 240. The heat sink 240 of FIG. 2A is cooled by air circulation driven by a fan 250. Thus, the example device 220 of FIG. 2A is air-cooled. The thermoelectric device 220 is operated by an example direct current power supply 260 electrically coupled with the thermoelectric device 220 and having a polarity that causes the thermoelectric device 220 to transfer heat in a direction from the cooling plate 230 toward the heat sink 240. In some embodiments, the DC power supply 260 is coupled with an aircraft's 28 volts of direct current (VDC) power supply, or converted from aircraft's fixed-frequency or variable-frequency alternating current (AC) power.

The DC power supply 260 of FIG. 2A may be controlled by switches, electronic circuitry, or an electronic control system 265. The electronic circuitry or electronic control system 265 may be equipped with temperature sensors (not shown) to monitor a temperature of the cooling plate 230 and, thus, control the thermoelectric device 220 to maintain a desired preset or user-selectable temperature of the cooling plate 230. The electronic control system 265 may also include a processor and a memory (not shown) storing a software program executable by the processor for performing a method of controlling the personal beverage warmer and cooler 210 to maintain a desired temperature of a beverage container 225 seated thereon. Additionally or alternatively, the electronic control system 265 may include one or more circuit(s), programmable processor(s), fuses, application-specific integrated circuit(s) (ASIC(s)), programmable logic device(s) (PLD(s)), field-programmable logic device(s) (FPLD(s)), and/or field-programmable gate array(s) (FPGA(s)), etc. configured to control the personal beverage warmer and cooler 210 to maintain a desired temperature of a beverage container 225 seated thereon.

FIG. 2B schematically illustrates another exemplary personal beverage warmer and cooler 270 including the thermoelectric device 220 configured to warm a beverage. A beverage container 275 containing a beverage, which a user wants to consume hot or warm, may be seated on an example heating plate or base 280. The personal beverage warmer and cooler 270 of FIG. 2B is similar to the personal beverage warmer and cooler 210 of FIG. 2A except that a polarity of the DC power supply 260 is reversed in the personal beverage warmer and cooler 270 compared to the personal beverage warmer and cooler 210. In this way, the heating plate or base 280 may heat the beverage through thermal contact with the beverage container 275 containing the beverage. In some embodiments, the heating plate 280 may be identical to the cooling plate 230. In other words, a single thermal plate or base may be functional as either the cooling plate 230 or the heating plate 280 depending upon the operational conditions of the thermoelectric device 220, that is, the selected polarity of the DC power supply 260. The heating plate 280 may be heated by the thermoelectric device 220. The thermoelectric device 220 may use a Peltier effect to provide direct heat transfer to the heating plate 280 through the thermoelectric device 220 from a cold side or heat exchanger 290. In some embodiments, the cold side 290 includes a heat exchanger substantially identical to that of the heat sink 240. In other words, a single heat exchanger may function as either the heat sink 240 or the cold side 290 depending upon the operational conditions of the thermoelectric device 220, that is, the selected polarity of the DC power supply 260. The cold side 290 of FIG. 2B is warmed by air circulation driven by the fan 250. The thermoelectric device 220 is operated by the DC power supply 260 electrically coupled with the thermoelectric device 220 using a polarity that causes the thermoelectric device 220 to transfer heat in a direction from the cold side 290 toward the heating plate 280. The polarity of the DC power supply 260 in the personal beverage warmer and cooler 270 of FIG. 2B is opposite that of the polarity of the DC power supply 260 in the personal beverage warmer and cooler 210 of FIG. 2B.

The DC power supply 260 of FIG. 2B may be controlled by switches, electronic circuitry, or an electronic control system 265. The electronic circuitry or electronic control system 265 may be equipped with temperature sensors (not shown) to monitor a temperature of the heating plate 280 and, thus, control the thermoelectric device 220 to maintain a desired preset and/or user-selectable temperature of the heating plate 280. The electronic control system 265 may also include a processor and a memory (not shown) including a software program executable by the processor for performing a method of controlling the personal beverage warmer and cooler 270 to maintain a desired temperature of a beverage container 225 seated thereon. Additionally or alternatively, the electronic control system 265 may include one or more circuit(s), programmable processor(s), fuses, ASIC(s), PLD(s), FPLD(s), and/or FPGA(s), etc. configured to control the personal beverage warmer and cooler 270 to maintain a desired temperature of a beverage container 225 seated thereon.

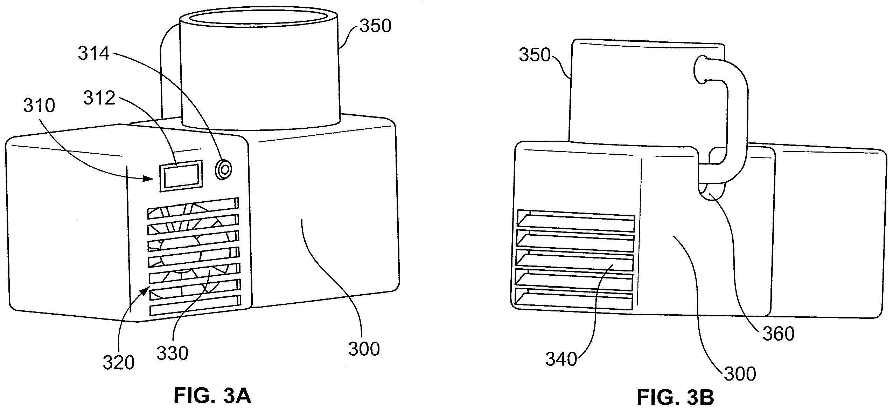

FIGS. 3A and 3B illustrate opposite side views of an exemplary personal beverage warmer and cooler 300. The example personal beverage warmer and cooler 300 of FIGS. 3A and 3B includes a control panel region 310 including control switch 312 and an indicator 314. The control switch 312 may include a toggle switch, a rocker switch, a button, a dial, or any other user input mechanism (e.g., a three-way switch having states of "cold", "warm" and "off") by which a person may set operational parameters for the personal beverage warmer and cooler 300. The indicator 314 may include an incandescent light, a light emitting diode (LED), an liquid crystal display (LCD) device, or other form of display device. For example, a person may set the control switch 312 to a desired heating position or user-selectable temperature, and the indicator 314 may indicate that the personal beverage warmer and cooler 300 is set to a heating mode (e.g., glow red). Alternatively, the person may set the control switch 312 to a desired cooling position or user-selectable temperature, and the indicator 314 may indicate that the personal beverage warmer and cooler 300 is set to a cooling mode (e.g., glow blue). Otherwise, the person may set the control switch 312 to an off position, and the indicator 314 may indicate that the personal beverage warmer and cooler 300 is turned off (e.g., glow yellow or not glow at all).

The personal beverage warmer and cooler 300 of FIGS. 3A and 3B includes an air inlet 320 through which circulating air enters and is blown by an air circulating fan 330 onto a heat exchanger such as the heat sink 240 or 290 (FIGS. 2A and 2B) coupled with a thermoelectric device such as the thermoelectric device 220. After the circulating air has exchanged heat with the thermoelectric device 220 via the heat exchanger 240 or 290, the circulating air exits the personal beverage warmer and cooler 300 via an air outlet 340. When the personal beverage warmer and cooler 300 is operating in a heating mode, the circulating air exiting the air outlet 340 may be cool. When the personal beverage warmer and cooler 300 is operating in a cooling mode, the circulating air exiting the air outlet 340 may be warm. The personal beverage warmer and cooler 300 may also include a recessed portion which holds a beverage container such as a cup or mug 350, and the personal beverage warmer and cooler 300 may also include a notch 360 for a handle of the cup or mug 350.

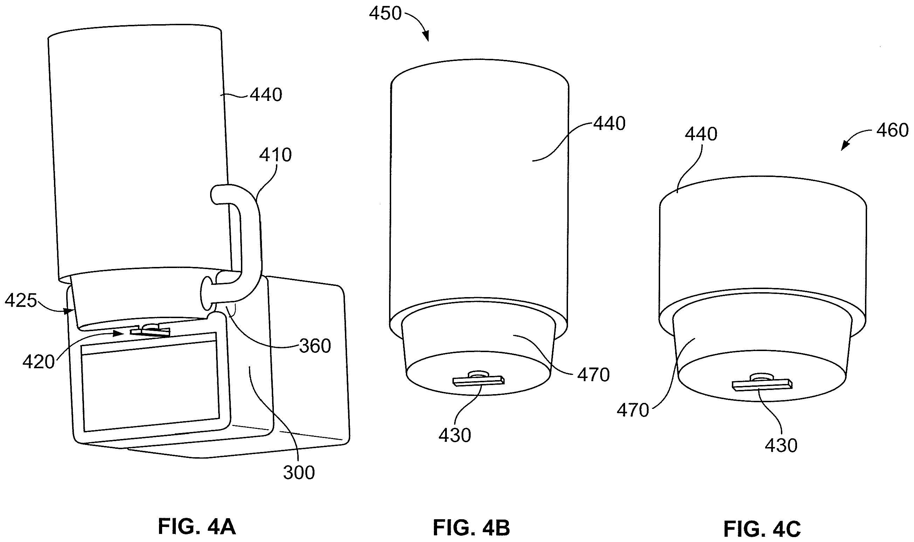

FIG. 4A illustrates a cross-sectional view of the exemplary personal beverage warmer and cooler 300 of FIGS. 3A and 3B including an example mug 410 seated therein. The cross-sectional view of FIG. 4A is vertically at a lowest point of the notch 360. FIGS. 4B and 4C illustrate exemplary beverage containers including extension inserts 450 and 460 and configured to be securely seated in the personal beverage warmer and cooler 300 of FIG. 4A. The mug 410 may be designed and used to hold a beverage after being poured out of a separate beverage container into the mug 410. The extension insert 450 may be designed and used to hold a tall beverage container such as a bottle of wine, while the extension insert 460 may be designed and used to hold a shorter beverage container such as a soda can.

As shown in FIG. 4A, an example locking mechanism 420 is positioned in a central area of an example recessed portion or base 425 of the personal beverage warmer and cooler 300 under the mug 410. The locking mechanism 420 of FIG. 4A includes a cutout region of the base 425 in which a matching key 430 of a beverage container or extension inserts 450 and 460 to lock or secure the beverage container or extension inserts 450 and 460 into position within the base 425 of the personal beverage warmer and cooler 300. In some embodiments, the extension inserts 450 and 460 click into place when the key 430 is inserted into the locking mechanism 420. Additionally or alternatively, the extension inserts 450 and 460 may be held in place in the base 425 by friction between the key 430 and the locking mechanism 420, and/or when the extension inserts 450 and 460 are rotated within the base 425. In other embodiments, the locking mechanism 420 and the key 430 are interchanged, such that the extension inserts 450 and 460 include the locking mechanism 420 while the base 425 includes the key 430.

The mug 410 and extension inserts 450 and 460 of FIGS. 4A-4C include thermal insulation material 440 to insulate a beverage contained within the mug 410 and the extension inserts 450 and 460 such that the beverage does not quickly lose heat or cold due to ambient temperature conditions, and to keep a surface temperature of an outside of the mug 410 and extension inserts 450 and 460 comfortable for a person to touch. In order to provide efficient thermal transfer between the personal beverage warmer and cooler 300 and a beverage contained within the extension inserts 450 and 460, the extension inserts 450 and 460 may include a thermal conductive material 470 at their base. The thermal conductive material 470 may be in thermal contact with the personal beverage warmer and cooler 300 when the extension inserts 450 and 460 are inserted into the base 425 of the personal beverage warmer and cooler 300.

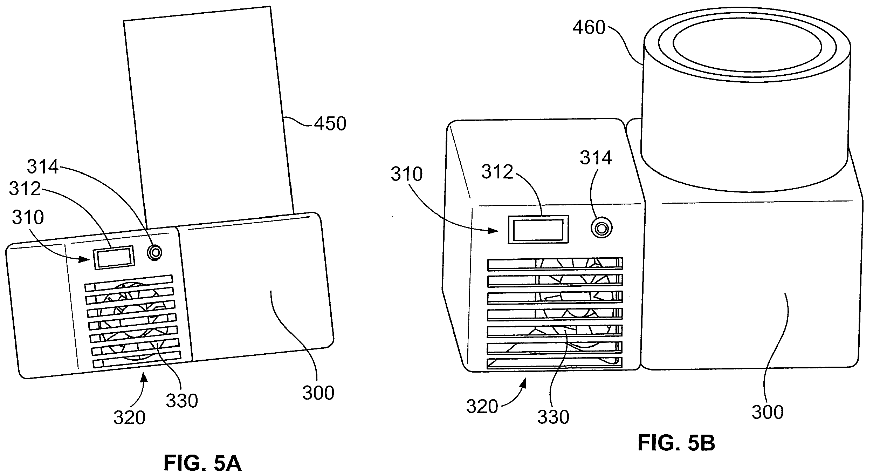

FIGS. 5A and 5B illustrate the exemplary personal beverage warmer and cooler 300 of FIGS. 3A and 3B in which the extension inserts 450 and 460 of FIGS. 4B and 4C are seated, respectively.

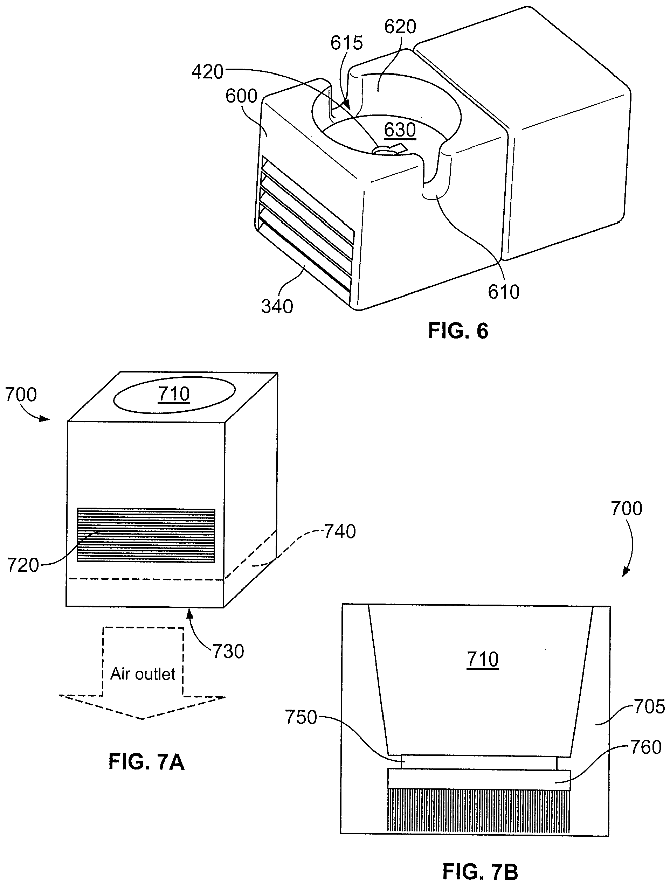

FIG. 6 illustrates a side view of another exemplary personal beverage warmer and cooler 600. The personal beverage warmer and cooler 600 of FIG. 6 is similar to the personal beverage warmer and cooler 300 illustrated in FIGS. 3A and 3B except that the personal beverage warmer and cooler 600 includes a notch 610 for a handle of a beverage container (e.g., the mug 350) on both sides of a recessed portion 615 in which the beverage container may be seated. The personal beverage warmer and cooler 600 of FIG. 6 includes a thermally conductive material 620 surrounding the recessed portion 615 and a base 630 (e.g., the cooling plate 230 and/or the heating plate 280 of FIGS 2A and 2B). The thermally conductive material 620 may improve thermal conduction between the base 630 of the personal beverage warmer and cooler 600 and a beverage container such as the mug 350 or the extension inserts 450 and 460.

FIG. 7A schematically illustrates a side view of still another exemplary personal beverage warmer and cooler 700. FIG. 7B schematically illustrates a cut-away side view of the personal beverage warmer and cooler 700 of FIG. 7A. The personal beverage warmer and cooler 700 of FIGS. 7A and 7B includes a thermally conductive material 705 forming a recessed portion 710 in which a cup, mug and/or extension inserts may be seated. The conductive material 705 may be functionally similar to the conductive material 620 described with reference to the personal beverage warmer and cooler 600 of FIG. 6. The personal beverage warmer and cooler 700 also includes an air inlet 720 on a side, and an air outlet 730 on a bottom of the personal beverage warmer and cooler 700. A fan 740 within the personal beverage warmer and cooler 700 circulates air from the air inlet 720, into operational proximity with a heat exchanger 760 such as the heat sink 240 or cold side 290 (FIGS. 2A and 2B) coupled with a thermoelectric module 750 (e.g., the thermoelectric device 220), and out through the air outlet 730. The personal beverage warmer and cooler 700 may make more efficient use of space in an installation than the personal beverage warmer and coolers 300 and 600 and may, therefore, be well suited for use in the passenger seat environment 100 illustrated in FIG. 1.

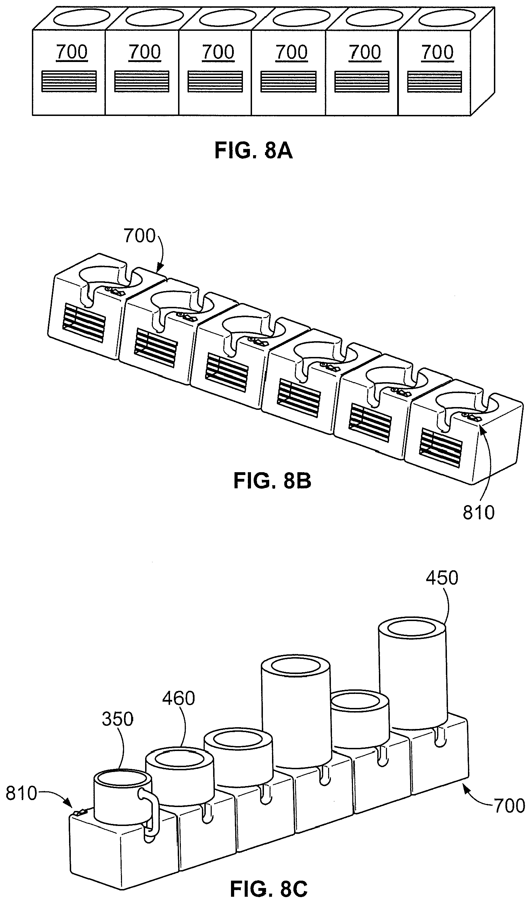

FIG. 8A schematically illustrates a plurality of the exemplary personal beverage warmer and coolers 700 of FIGS. 7A and 7B assembled or situated adjacent to one another. As shown in FIG. 8A, the plurality of personal beverage warmer and coolers 700 may be assembled within the beverage holder zone 160 (FIGS. 1A and 1B) to serve as the plurality of beverage holders 110 illustrated in FIG. 1. FIGS. 8B and 8C illustrate opposite side views of the plurality of exemplary personal beverage warmer and coolers 700 of FIG. 8A assembled or situated adjacent to one another. As illustrated in FIG. 8C, the personal beverage warmer and coolers 700 may hold beverage containers such as the mug 350 and/or the extension inserts 450 and 460. As illustrated in FIGS. 8B and 8C, a control panel 810 including a control switch and an indicator may be disposed at a top surface of the personal beverage warmer and cooler 700 adjacent to the recessed area in which the mug 350 and/or the extension inserts 450 and 460 may be seated. The example control panel 810 may be substantially similar to the control panel 310, and may include a control switch similar to the control switch 312 and an indicator similar to the indicator 314 as described elsewhere herein.

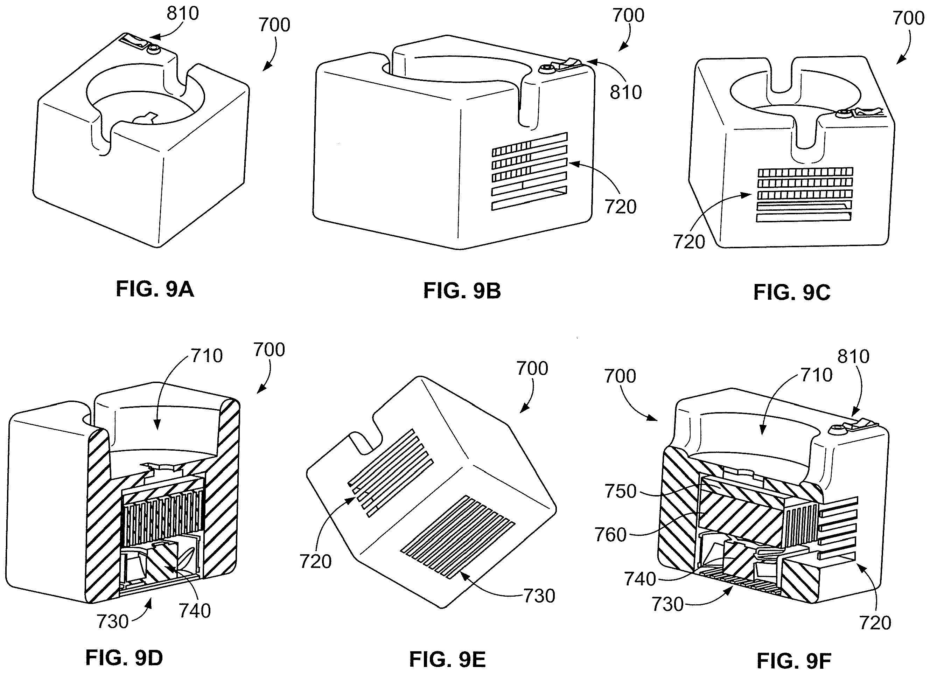

FIGS. 9A - 9F illustrate various views of the exemplary personal beverage warmer and coolers 700 of FIGS. 7A, 7B, 8A, 8B, and 8C.

Functions of the exemplary personal beverage warmer and coolers disclosed herein may be controlled by a controller according to instructions of a software and/or firmware program executed by a processor of the controller. Alternatively, some or all of the disclosed embodiments may be implemented using any combination(s) of fuses, ASIC(s), PLD(s), FPLD(s), FPGA(s), discrete logic, hardware, firmware, etc. Also, some or all of the disclosed embodiments may be implemented manually or as any combination of any of the foregoing techniques, for example, any combination of firmware, software, discrete logic and/or hardware. The software program (e.g., machine-readable instructions) may be stored in any number and/or type(s) of tangible computer-readable storage media or non-transient computer-readable storage media. As used herein, "computer-readable storage medium" expressly excludes any medium on which a signal propagates. The software program may be written in a computer-programming language (e.g., C, C++, etc.) compiled to be executable by the processor of the controller. Examples of types of computer-readable storage media include, but are not limited to, a magnetic storage media (e.g., a floppy disk, a hard disk drive, and a magnetic tape), optical recording media (e.g., a compact disc (CD), a digital versatile disc (DVD), etc.), an electronic storage media (e.g., an integrated circuit (IC), a read-only memory (ROM), a random-access memory (RAM), an electronically erasable programmable read-only memory (EEPROM), and a flash memory), a quantum storage device, a cache, and/or any other storage media in which information may be stored for any duration (e.g., for extended time periods, permanently, brief instances, for temporarily buffering, or for caching). The storage medium may also be distributed over network-coupled computer systems (e.g., a network-attached storage device, a server-based storage device, and/or a shared network storage device) so that the program instructions are stored and/or executed in a distributed fashion.

Embodiments may be disclosed in terms of functional block components and various processing steps. Such functional blocks may be realized by any number of hardware and/or software components configured to perform the specified functions. For example, the embodiments may employ various integrated circuit components, e.g., memory elements, processing elements, logic elements, look-up tables, and the like, which may carry out a variety of functions under, for example, the control of one or more microprocessors or other control devices. When elements of the embodiments are implemented using software programming or software elements, the embodiments may be implemented using any programming or scripting language such as C, C++, Java, assembler, or the like, with the various algorithms being implemented by any combination of data structures, objects, processes, routines and/or other programming elements. Furthermore, the embodiments could employ any number of conventional techniques for electronics configuration, signal processing and/or control, data processing and the like. The word "mechanism" is used broadly herein and is not limited to mechanical or physical embodiments, but can include software routines in conjunction with processors, etc.

The particular implementations shown and disclosed herein are illustrative examples or embodiments of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The use of any and all examples, or exemplary language (e.g., "such as" or "for example") provided herein, is intended merely to better illuminate the disclosed embodiments and does not pose a limitation on the scope of the invention unless otherwise claimed. Moreover, no item or component is essential to the practice of the invention unless the element is specifically described as "essential" or "critical".

As the disclosed embodiments are described with reference to illustrations, various modifications or adaptations of the methods and or specific structures described may become apparent to those skilled in the art. All such modifications, adaptations, or variations that rely upon the teachings of this disclosure, and through which these teachings have advanced the art, are considered to be within the spirit and scope of the invention. Hence, these descriptions and drawings should not be considered in a limiting sense, as it is understood that the invention is in no way limited to only the illustrated embodiments.

It will be recognized that the terms "comprising," "including," and "having," as used herein, are specifically intended to be read as open-ended terms of art. The use of the terms "a" and "and" and "the" and similar referents in the context of describing the embodiments (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context.

## Claims

1. An assembly for regulating beverage temperature in a seating area of a vehicle, the assembly comprising:
a first personal beverage warmer and cooler (210;300;700) and a second personal beverage warmer and cooler (210;300;700), each personal beverage warmer and cooler (210;300;700) comprising:
a thermoelectric device (220) thermally coupled with and configured to be energized to exchange heat with the base of the personal beverage warmer and cooler (210;300;700);
a heat exchanger (240) thermally coupled with the thermoelectric device (220);
a fluid medium for exchanging heat with the thermoelectric device (220) via the heat exchanger (240); and
a base (230;280;425;630) comprising:
a recessed portion (615;710);
a thermally conductive material (470;620) surrounding the recessed portion (615;710);
a locking mechanism (420) positioned in a central area of the recessed portion (615;710);
a first extension insert (450) comprising:
a base having a thermally conductive material (470);
a thermal insulation material (440) adjacent to the base and extending to a first height; and
a key (430) positioned on the base and positioned to engage the locking mechanism (420) to secure the first extension insert (450) within the recessed portion (615;710);
wherein, when the first extension insert (450) is inserted into the recessed portion (615;710) of the first personal beverage warmer and cooler (210;300;700), the thermally conductive material (470) of the base of the first extension insert (450) is in thermal contact with the base of the first personal beverage warmer and cooler (210;300;700);
a second extension insert (460) comprising:
a base having a thermally conductive material (470);
a thermal insulation material (440) adjacent to the base and extending to a second height; and
a key (430) positioned on the base and positioned to engage the locking mechanism (420) to secure the second extension insert (460) within the recessed portion (615;710);
wherein, when the second extension insert (460) is inserted into the recessed portion (615;710) of the second personal beverage warmer and cooler (210;300;700), the thermally conductive material (470) of the base of the second extension insert (460) is in thermal contact with the base of the second personal beverage warmer and cooler (210;300;700).

2. The assembly of claim 1, wherein the fluid medium is air, and the personal beverage warmer and cooler (210;300;700) further comprises a fan (250;330) that blows the air in thermal contact with the heat exchanger (240).

3. The assembly of claim 1 or claim 2, wherein the thermoelectric device (220) is a Peltier device.

4. The assembly of any one of claims 1 to 3, wherein the personal beverage warmer and cooler (210;300;700) further comprises a power supply (260) and a switch (312) that changes the polarity of the power supply (260) corresponding to a first state for cooling and a second state for heating.

5. The assembly of any one of claims 1 to 4, further comprising a seat console (150) that includes a plurality of beverage holders (110), each beverage holder (110) of the plurality including a personal beverage warmer and cooler (210;300;700).

6. A method for selectively heating or cooling a beverage near a seat of a vehicle, the method comprising:
conducting heat in a direction to or from a container (225;275;350) containing the beverage via a base (230;280;425;630) that includes a thermally conductive material (620) and a recessed portion (615) dimensioned to receive the container (225;275;350) holding the beverage;
energizing a thermoelectric device (220) thermally coupled with the base (230;280;425;630) to exchange heat between the base (230;280;425;630) and the beverage within the container (225;275;350);
using a power supply (260), energizing the thermoelectric device (220) in a first state that causes the power supply to cool the base (230;280;425;630) and the beverage;
using the power supply (260), energizing the thermoelectric device (220) in a second state that causes the power supply (260) to heat the base (230;280;425;630) and the beverage;
exchanging heat between the thermoelectric device (220) and a liquid medium using a heat exchanger (240) thermally coupled with the thermoelectric device (220), **characterized by**
mating a lock (420) with a key (430) of an extension insert (450; 460) to secure the extension insert (450; 460) on the base (230;280;425;630).

7. The method of claim 6, wherein the liquid medium is air, the method further comprising using a fan (250;330) to blow air in thermal contact with the heat exchanger (240).

8. The method of claim 6 or claim 7, wherein the thermoelectric device (220) is a Peltier device.

9. The method of any one of claims 6 to 8, further comprising changing the polarity of the power supply (260) in response to the activation of a switch (312), wherein the polarity of the power supply (260) corresponds to the first state for cooling and the second state for heating.

10. A method comprising:
energizing a thermoelectric device at a vehicle seat to a first state to cool a beverage container thermally coupled to the thermoelectric device when a first user input is received; and
energizing the thermoelectric device to a second state to heat the beverage container when a second user input is received.

11. The method of claim 10, further comprising:
exchanging first heat between the thermoelectric device and a heat exchanger; and
exchanging second heat between the heat exchanger and a liquid medium.

12. The method of claim 10 or claim 11, wherein energizing the thermoelectric device to the first state comprises applying an electrical current to a Peltier device, and energizing the thermoelectric device to second state comprises applying an opposite electrical current to the Peltier device.

13. The method of any one of claims 10 to 12, wherein the first user input corresponds to a first position of a switch, and the second user input corresponds to a second position of the switch.

14. A seating area of a vehicle, the seating area comprising a temperature regulating apparatus including:
a base including a thermally conductive material that conducts heat at least one of to or from a container seated thereon;
a thermoelectric device thermally coupled with the base and to be energized to exchange heat with the base; and
a heat exchanger thermally coupled with the thermoelectric device and a liquid medium to exchange heat therebetween,
wherein the seating area further comprises a second temperature regulating apparatus including:
a second base including second thermally conductive material that conducts heat to or from a second container seated thereon;
a second thermoelectric device thermally coupled with the second base and energized to exchange heat with the second base; and
a second heat exchanger thermally coupled with the second thermoelectric device and a second liquid medium to exchange heat therebetween,
and wherein the base further includes a lock that mates with a key of an extension insert to secure the extension insert on the base, the extension insert dimensioned to receive a container holding the beverage, and a recessed portion dimensioned to receive a container holding the beverage.

15. The seating area of claim 14, wherein the liquid medium is air, the temperature regulating apparatus further comprising a fan that blows air in thermal contact with the heat exchanger, and wherein the thermoelectric device is to be energized by a power supply to heat or cool the base, by means of a switch that changes a polarity of the power supply that energizes the thermoelectric device, wherein a first state of the switch causes the power supply to cool the base, and a second state of the switch causes the power supply to heat the base.

16. An apparatus to regulate the temperature of a beverage near a seat of a vehicle, the apparatus comprising:
a base including a thermally conductive material that conducts heat in a direction that is at least one of to or from a container seated thereon;
a thermoelectric device thermally coupled with the base and to be energized to exchange heat with the base; and
a heat exchanger thermally coupled with the thermoelectric device and a liquid medium to exchange heat therebetween.

17. The apparatus of claim 16, wherein the liquid medium is air, the apparatus further comprising a fan that blows air in thermal contact with the heat exchanger.

18. The apparatus of claim 16, wherein the thermoelectric device is to be energized by a power supply to heat the base.

19. The apparatus of claim 16, wherein the thermoelectric device is to be energized by a power supply to cool the base.

20. The apparatus of claim 16, further comprising a switch that changes a polarity of a power supply that energizes the thermoelectric device, wherein a first state of the switch causes the power supply to cool the base, and a second state of the switch causes the power supply to heat the base.

21. The apparatus of claim 16, wherein the base further includes a lock that mates with a key of an extension insert to secure the extension insert on the base, the extension insert dimensioned to receive a container holding the beverage.

22. The apparatus of claim 16, wherein the base further includes a recessed portion dimensioned to receive a container holding the beverage.

23. The apparatus of claim 16, further comprising:
a power supply; and
a processor to control the power supply to maintain a temperate of the beverage.
